# EUROPEAN PATENT SPECIFICATION

(11) **EP 3 852 436 B1**
(45) Date of publication and mention of the grant of the patent: **01.01.2025**
(21) Application number: 18933178.8
(22) Date of filing: 13.09.2018
(51) Int. Cl.: H04W 28/18, H04W 72/0446, H04L 5/00, H04L 1/1812, H04L 1/08

(54) **USER EQUIPMENT AND WIRELESS COMMUNICATION METHOD**
BENUTZERGERÄT UND DRAHTLOSKOMMUNIKATIONSVERFAHREN
ÉQUIPEMENT UTILISATEUR ET PROCÉDÉ DE COMMUNICATION SANS FIL

(43) Date of publication of application: 21.07.2021
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/034030
(87) International publication number: WO 2020/054036

(56) References cited:
- FUJITSU: "Ambiguities about beam indication and aperiodic CSI-RS triggering offset configuration in some cases", vol. RAN WG1, no. Athens, Greece; 20180226 - 20180302, 16 February 2018 (2018-02-16), XP051397050, Retrieved from the Internet <URL:http://www.3gpp.org/ftp/tsg%5Fran/WG1%5FRL1/TSGR1%5F92/Docs/> [retrieved on 20180216]
- PANASONIC: "Discussion on multi-slot PUCCH and PUSCH supporting", vol. RAN WG1, no. Busan, Korea; 20180521 - 20180525, 20 May 2018 (2018-05-20), XP051441394, Retrieved from the Internet <URL:http://www.3gpp.org/ftp/Meetings%5F3GPP%5FSYNC/RAN1/Docs/> [retrieved on 20180520]
- ASUSTEK: "Remaining issues on beam management", vol. RAN WG1, no. Sanya, China; 20180416 - 20180420, 15 April 2018 (2018-04-15), XP051426324, Retrieved from the Internet <URL:http://www.3gpp.org/ftp/Meetings%5F3GPP%5FSYNC/RAN1/Docs/> [retrieved on 20180415]
- ERICSSON: "Feature lead summary 4 on beam measurement and reporting", vol. RAN WG1, no. Athens, Greece; 20180226 - 20180302, 5 March 2018 (2018-03-05), XP051398779, Retrieved from the Internet <URL:http://www.3gpp.org/ftp/tsg%5Fran/WG1%5FRL1/TSGR1%5F92/Docs/> [retrieved on 20180305]
- VIVO: "DCI content size and compression", 3GPP TSG RAN WG1 NR AD-HOC MEETING #2 R1-1710395, 30 June 2017 (2017-06-30), XP051299607, Retrieved from the Internet <URL:http://www.3gpp.org/ftp/tsg_ran/WG1_RL1/TSGR1_AH/NR_AH_1706/Docs/Rl-1710395.zip> [retrieved on 20181022]
- NOKIA ET AL.: "Feature lead summary on QCL", 3GPP TSG RAN WG1 #94 R1-1809758, 24 August 2018 (2018-08-24), XP051517119, Retrieved from the Internet <URL:http://www.3gpp.org/ftp/tsg_ran/WG1_RL1/TSGR1_94/Docs/Rl-1809758.zip> [retrieved on 20181022]
- CATT: "Corrections to NR PDCCH", 3GPP TSG RAN WG1 MEETING #94 R1-1808378, 24 August 2018 (2018-08-24), XP051515760, Retrieved from the Internet <URL:http://www.3gpp.org/ftp/tsg_ran/WG1_RL1/TSGR1_94/Docs/R1-1808378.zip> [retrieved on 20181022]

## Description

### Technical Field

The present disclosure relates to a terminal, a radio communication method for a terminal, and a system.

### Background Art

In the Universal Mobile Telecommunications System (UMTS) network, the specifications of long term evolution (LTE) have been drafted for the purpose of further increasing high speed data rates, providing lower delays, and the like (see Non Patent Literature 1). In addition, the specifications of LTE-A (LTE Advanced, LTE Rel. 10, 11, 12, and 13) have been drafted for the purpose of further increasing the capacity and enhancement of LTE (LTE Rel. 8 and 9).

LTE successor systems (e.g., referred to as Future Radio Access (FRA), 5th generation mobile communication system (5G), 5G+ (plus), New Radio (NR), New radio access (NX), Future generation radio access (FX), LTE Rel. 14 or 15 or later) are also under study.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010 FUJITSU: "Ambiguities about beam indication and aperiodic CSI-RS triggering offset configuration in some cases" (3GPP DRAFT; R1-1801892) describes ambiguities in UL and DL beam indication, and includes the following proposals: Proposal 1: A default TCI state should be defined before DCI is decoded. Proposal 2: The exact timing of 'the reception of the DL DCI' in offset derivation should be clarified to solve the ambiguity. The last symbol of all configured CORESETs in which the scheduling DCI could be received is preferred as the point of 'the reception of the DL DCI', for the reason that this point is quite clear to the UE before the DCI is successfully decoded. Proposal 3: It should be clarified that the current text on dynamic TCI states only applies for single slot PDSCH. The case of multi-slot PDSCH needs more discussion. Proposal 4: Specify UE behavior in 38.213 subclause 9.2.1 when UE has not received an indication for PUCCH-Spatialrelationinfo. Before UE applies the MAC-CE activation message, UE is expected to transmit PUCCH using the spatial relationship indicated by the first entry of PUCCH-Spatialrelationinfo. Proposal 5: A bitmap is introduced in the definition of the higher layer parameter AperiodicNZP-CSI-RS-TriggeringOffset. PANASONIC: "Discussion on multi-slot PUCCH and PUSCH supporting" (3GPP DRAFT; R1-1806184) describes the authors' view on UE features focusing on multi-slot PUCCH and PUSCH.

### Summary of Invention

### Technical Problem

In future radio communication systems (hereinafter, also simply referred to as NR), it has been considered to control transmission/reception processing of channels/signals based on a transmission configuration indication (TCI) state. Furthermore, it has been considered to perform multi-slot transmission or multi-slot reception for some channels/signals in the NR.

However, while the TCI state to be applied may be changed during the multi-slot based on the NR specification having been considered so far, it has not yet been considered whether such a change is permissible. If this control is not clarified, communication throughput may decrease due to a discrepancy in TCI state recognition for multi-slot transmission/reception between the base station and the user terminal.

In view of the above, it is an object of the present disclosure to provide a user terminal and a radio communication method capable of appropriately controlling a TCI state of a multi-slot channel/signal.

### Solution to Problem

According to one aspect of the present invention, there is provided a terminal as set out in Claim 1.According to another aspect of the present invention, there is provided a radio communication method as set out in Claim 3.

According to another aspect of the present invention, there is provided a system as set out in Claim 4. Advantageous Effects of Invention

According to one aspect of the present disclosure, the TCI state of a multi-slot channel/signal can be appropriately controlled.

### Brief Description of Drawings

Fig. 1 is an explanatory diagram of a problem related to activation of a TCI state based on MAC CE.
Fig. 2 is a diagram illustrating an exemplary schematic configuration of a radio communication system according to one embodiment.
Fig. 3 is a diagram illustrating an exemplary overall configuration of a base station according to a background example useful for understanding an embodiment.
Fig. 4 is a diagram illustrating an exemplary functional configuration of a base station according to the background example.
Fig. 5 is a diagram illustrating an exemplary overall configuration of a user terminal according to one embodiment.
Fig. 6 is a diagram illustrating an exemplary functional configuration of a user terminal according to one embodiment.
Fig. 7 is a diagram illustrating an exemplary hardware configuration of a base station according to the background example and a user terminal according to one embodiment.

### Description of Embodiments and Background Examples

A user terminal disclosed herein includes a transmitting/receiving section that performs multi-slot transmission or reception of a given channel, and a control section that makes a given assumption related to a change in a transmission configuration indication (TCI) state of the multi-slot transmission or reception.

### (QCL/TCI)

In the NR, it has been considered that a user terminal (user equipment (UE)) controls reception processing (e.g., demapping, demodulation, decoding, reception beam formation, etc.) and transmission processing (e.g., mapping, modulation, coding, precoding, Tx beam formation, etc.) of a channel (e.g., Physical Downlink Control Channel (PDCCH), Physical Downlink Shared Channel (PDSCH), Physical Uplink Control Channel (PUCCH), etc.) based on information (QCL information) associated with Quasi-Co-Location (QCL) of the channel.

Here, QCL is an index indicating the statistical properties of the channel. For example, when one signal/channel has a QCL relationship with another signal/channel, between these different signals/channels, it may mean that it is possible to assume that they are the same at least in one of doppler shift, doppler spread, average delay, delay spread, spatial parameter (e.g., spatial Rx parameter) (i.e., QCL for at least one of these).

Note that the spatial Rx parameter may correspond to the reception beam of the UE (e.g., reception analog beam), and the beam may be specified based on the spatial QCL. The QCL (or at least one element of the QCL) in the present disclosure may be read as sQCL (spatial QCL).

A plurality of types of QCL (QCL type) may be defined. For example, four QCL types A to D with different parameters (or parameter sets) that can be assumed to be the same may be provided, which parameters are shown below:
- QCL type A: doppler shift, doppler spread, average delay, and delay spread;
- QCL Type B: doppler shift and doppler spread;
- QCL type C: average delay and doppler shift; and
- QCL type D: spatial Rx parameter.

The Transmission Configuration Indication (TCI) state (TCI-state) may indicate (or may include) QCL information. The TCI state may be, for example, information regarding QCL between a target channel (or a reference signal (RS) for the channel) and another signal (e.g., another downlink reference signal (DL-RS)), and may include at least one of information regarding a DL-RS in a QCL relationship (DL-RS related information) and information indicating the above QCL type (QCL type information).

The DL-RS related information may include at least one of information indicating a DL-RS in QCL relationship and information indicating a resource of the DL-RS. For example, when a plurality of reference signal sets (RS sets) is configured in the UE, the DL-RS related information may indicate at least one of a DL-RS having a QCL relationship with the channel (or port for the channel), a resource of the DL-RS, and the like among RSs included in the RS set.

Here, at least one of an RS and a DL-RS for the channel may be at least one of a synchronization signal (SS), a broadcast channel (physical broadcast channel (PBCH)), a synchronization signal block (SSB), a mobility reference signal (Mobility RS (MRS)), a channel state information reference signal (CSI-RS), a demodulation reference signal (DMRS), a beam-specific signal, and the like, or a signal constituted by extension or change thereof (e.g., a signal constituted by changing at least one of the density and the period).

The synchronization signal may be, for example, at least one of a primary synchronization signal (PSS) and a secondary synchronization signal (SSS). The SSB may be a signal block including a synchronization signal and a broadcast channel, and may be called an SS/PBCH block or the like.

Note that the TCI state may correspond to a beam. For example, the UE may assume that channels/reference signals with different TCI states are transmitted using different beams.

### <TCI state for PDSCH>

Information associated with the PDSCH (or DMRS antenna port associated with the PDSCH) and the QCL with a given DL-RS may be called a TCI state for the PDSCH.

The UE may be notified (configured) of M (M ≥ 1) TCI states for the PDSCH (M pieces of QCL information for the PDSCH) via higher layer signaling. Note that the number M of the TCI states configured in the UE may be limited by at least one of the UE capability and the QCL type.

In the present disclosure, the higher layer signaling may be, for example, any of Radio Resource Control (RRC) signaling, Medium Access Control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

The downlink control information (DCI) used for scheduling the PDSCH may include a given field indicating the TCI state for the PDSCH (e.g., it may be called a TCI field, TCI state field, etc.). The DCI may be used for PDSCH scheduling of one cell, and may be called, for example, DL DCI, DL assignment, DCI format 1_0, DCI format 1_1, or the like.

Whether or not the TCI field is included in the DCI may be controlled by information provided from a base station to the UE. The information may be information (TCI-PresentInDCI) indicating whether the TCI field is present in the DCI (present or absent). The information may be configured in the UE by, for example, higher layer signaling.

When the DCI contains an x-bit (e.g., x = 3) TCI field, the base station may preliminarily configure, in the UE, up to 2^{x} (e.g., eight when x = 3) types of TCI states using the higher layer signaling. A value of the TCI field in the DCI (TCI field value) may indicate one of the TCI states configured by the higher layer signaling in advance.

When more than eight types of TCI states are configured in the UE, MAC CE may be used to activate (or specify) equal to or less than eight types of TCI states. The MAC CE may be called a TCI state activation/deactivation for UE-specific PDSCH MAC CE. A value of the TCI field in the DCI may indicate one of the TCI states activated by the MAC CE.

The MAC CE is used to specify a TCI state to be mapped to the code point of the TCI field of the DCI among TCI state IDs configured by RRC signaling, and to activate the TCI state. The activated TCI state may be mapped in ascending or descending order of the TCI state IDs to 2^{x} - 1 (e.g., seven when x = 3) from the code point value zero of the TCI field mentioned above.

When a slot for transmitting, using the UE, hybrid automatic repeat request acknowledgement (HARQ-ACK) for the PDSCH that has provided the MAC CE is set to n, the activation/deactivation based on the MAC CE (mapping of TCI states and TCI fields in the DCI) may be applied from slot n + 3*(the number of slots in a subframe) + 1. That is, in the slot n + 3*(the number of slots in a subframe) + 1, update of the code point of the TCI field based in the MAC CE may be effective.

When a time offset between the DL DCI reception and the reception of the PDSCH corresponding to the DCI is equal to or more than a given threshold value (it may be called "threshold", "threshold for offset between a DCI indicating a TCI state and a PDSCH scheduled by the DCI", "Threshold-Sched-Offset", etc.), the UE may assume that the RS in the RS set related to the QCL type parameters given by the TCI state indicated by the DCI and the antenna port of one or more DMRS port groups of the PDSCH of the serving cell are QCL.

The given threshold value may be based on the UE capability, and may be based on, for example, the delay in decoding and beam switching of the PDCCH. The information of the given threshold value may be configured from the base station using higher layer signaling, or may be transmitted from the UE to the base station.

Furthermore, when the time offset between the DL DCI reception and the PDSCH corresponding to the DCI is less than the given threshold value mentioned above, the UE may assume that the antenna port of one or more DMRS port groups of the PDSCH of the serving cell is QCL based on the TCI state used for PDCCH QCL notification corresponding to the minimum CORESET-ID (ID for identifying the CORESET) in the latest slot in which one or more control resource sets (CORESETs) are set in the UE (e.g., assuming that the antenna port is QCL with DL-RS based on the TCI state activated for the CORESET corresponding to the minimum CORESET-ID) .

### <Spatial relation for PUCCH>

A PUCCH corresponding to the TCI state may be expressed as a spatial relation. In the Rel-15 NR, the PUCCH configuration information ("PUCCH-Config" information element) of the RRC can include spatial relation information between a given RS and the PUCCH. The given RS may be at least one of SSB, CSI-RS, and a sounding reference signal (SRS).

When the spatial relation information related to SSB or CSI-RS and PUCCH is configured, the UE may transmit the PUCCH using a spatial domain filter same as the spatial domain filter for receiving the SSB or CSI-RS. That is, in this case, the UE may assume that the UE reception beam of the SSB or CSI-RS and the UE Tx beam of the PUCCH are the same.

When the spatial relation information related to the SRS and the PUCCH is configured, the UE may transmit the PUCCH using a spatial domain filter same as the spatial domain filter for transmitting the SRS. That is, in this case, the UE may assume that the UE Tx beam of the SRS and the UE Tx beam of the PUCCH are the same.

Note that the spatial domain filter for transmission of the base station, the downlink spatial domain transmission filter, and the Tx beam of the base station may be replaced with each other. The spatial domain filter for reception of the base station, the uplink spatial domain receive filter, and the reception beam of the base station may be replaced with each other.

Further, the spatial domain filter for transmission of the UE, the uplink spatial domain transmission filter, and the Tx beam of the UE may be replaced with each other. The spatial domain filter for reception of the UE, the downlink spatial domain receive filter, and the reception beam of the UE may be replaced with each other.

When more than one piece of spatial relation information regarding the PUCCH is configured, a PUCCH spatial relation activation/deactivation MAC CE is used to perform control in such a manner that one PUCCH spatial relation is made active with respect to one PUCCH resource at a given time.

The MAC CE may include information such as a serving cell ID, a bandwidth part (BWP) ID, and a PUCCH resource ID to which application is performed.

The UE may apply the activation/deactivation based on the MAC CE (corresponding configuration of the spatial domain filter based on the MAC CE) 3 ms after from the slot transmitting the HARQ-ACK for the PDSCH provided with the MAC CE for PUCCH transmission.

### (Multi-Slot Transmission/Reception)

It has been considered to perform multi-slot transmission or multi-slot reception for some channels in the NR. Multi-slot transmission (reception) is transmission (reception) over multiple slots, and may be called slot aggregation, repetition transmission (reception), or the like. Multi-slot transmission (reception) can be expected to expand coverage, improve quality in reception, and the like.

For example, when the UE is configured to perform repetition transmission (reception) of a certain channel using higher layer signaling, physical layer signaling (e.g., DCI), or a combination thereof, it may perform repetition transmission (reception) of the channel. In each slot of the multi-slot transmission (reception), signals having the same contents may be transmitted (received), or signals having different contents may be transmitted (received).

For the multi-slot PUSCH (PUSCH repetition), a repetition factor may be configured in the UE by higher layer signaling (e.g., RRC parameter "pusch-AggregationFactor" for the PUSCH, and RRC parameter "repK" for the configured grant PUSCH).

For the multi-slot PDSCH (PDSCH repetition), a repetition factor may be configured in the UE by higher layer signaling (e.g., RRC parameter "pdsch-AggregationFactor") .

Multi-slot PUCCH (PUCCH repetition) may be set to the UE for a particular format (e.g., PUCCH formats 1, 3, and 4 with a transmission period of equal to or more than four symbols). The repetition factor (e.g., parameter "nrofSlots" included in "PUCCH-FormatConfig" of the RRC) may be configured in common for all the PUCCH formats 1, 3, and 4.

Note that, in the present disclosure, the repetition factor and the repetition number may be read interchangeably.

For the multi-slot PDSCH, it has been considered to define a scheduling delay as a time between the last symbol of the PDCCH and the first symbol of the PDSCH in the first scheduled slot. In this case, a TCI state of the multi-slot PDSCH may be determined based on the scheduling offset of the first PDSCH slot rather than the scheduling offset of each PDSCH slot.

Alternatively, for the multi-slot PDSCH, it has been considered to define a scheduling delay as a time between the last symbol of the PDCCH and the first symbol of the PDSCH in each scheduled slot. In this case, a TCI state of the multi-slot PDSCH may be determined based on the time from the end of the last symbol of the PDCCH that transmits the scheduling DL DCI to the start of the first symbol of the corresponding PDSCH in each PDSCH slot.

In a case where the time offset between the DCI reception and the reception of the PDSCH slot corresponding to the DCI is smaller than the given threshold value ("Threshold-Sched-Offset"), a default QCL (TCI state) based on the minimum CORESET ID in the latest (or recent) slot may be applied for the PDSCH.

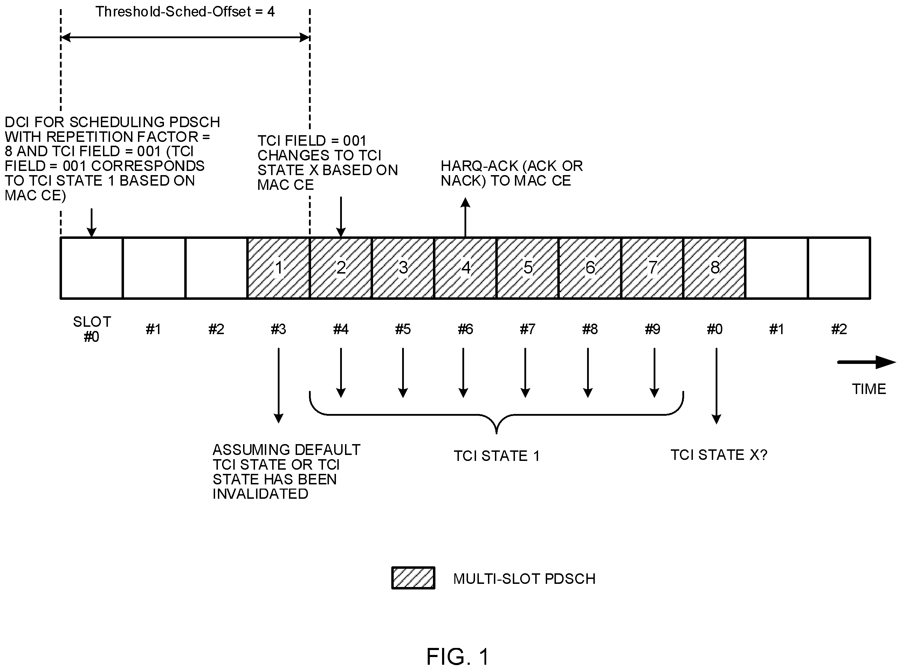

Meanwhile, as described above, it has been considered to control activation of a TCI state, a spatial relation, and the like using the MAC CE. However, it has not yet been considered how to determine a TCI state configuration for multi-slot transmission/reception. This problem will be described with reference to Fig. 1.

Fig. 1 is an explanatory diagram of a problem related to activation of a TCI state based on the MAC CE. In the present example, it is assumed that a given threshold value ("Threshold-Sched-Offset") = 4 slots, the number of slots in the subframe = 1, and K₀ indicated by the DCI is 3.

In slot #0, the UE receives DCI that schedules a multi-slot PDSCH with a repetition number = 8. Here, it is assumed that the value indicated by the TCI field of the DCI is 1 ("001"), which corresponds to a TCI state 1 activated by the MAC CE.

The UE starts receiving the multi-slot PDSCH from slot #3 based on the DCI. According to the study of the NR so far, the UE may assume that the TCI state of the PDSCH in slot #3 (first repetition) is a default TCI state, or that the TCI state is invalid.

From slot #4, the UE may determine the TCI state of the multi-slot PDSCH based on the TCI field of the scheduling DCI, or may determine to be the TCI state 1 to perform reception processing.

Meanwhile, in slot #4, the UE separately receives a TCI state activation/deactivation for UE-specific PDSCH MAC CE. It is assumed that the MAC CE at least indicates that a TCI state X (X may be other than 1) is mapped to a code point value 1 of the TCI field.

The UE transmits HARQ-ACK (ACK or NACK) for the MAC CE in slot #6. In the present example, according to the application of the activation timing described above, the UE can use the updated TCI state mapping based on the MAC CE mentioned above from the second slot #0 (eighth repetition) illustrated in the figure.

However, as illustrated in Fig. 1, it has not yet been considered whether it is permissible to change the TCI state to be applied during the multi-slot. That is, in the case of a multi-slot PDSCH, it has not yet been considered whether it is permissible if the time offset between the DCI reception and the reception of the PDSCH slot corresponding to the DCI is smaller than the given threshold value ("Threshold-Sched-Offset"). In addition, it has also not yet been considered whether it is permissible to change the TCI state to be applied based on MAC CE during multi-slot transmission/reception.

Similar problems related to TCI state control are considered for multi-slot transmission/reception other than the multi-slot PDSCH (e.g., multi-slot PUCCH).

If control of those is not clarified, processing of the base station/UE becomes complex and there may be a discrepancy in TCI state recognition of a multi-slot between the base station and the UE so that the multi-slot is not appropriately processed, which may cause a decrease in communication throughput.

In view of the above, the present inventors have been conceived a method for appropriately controlling a TCI state of a channel or a signal transmitted/received in a multi-slot.

Hereinafter, embodiments according to the present disclosure will be described in detail with reference to the accompanying drawings. The radio communication method according to each of the embodiments may be applied independently, or may be applied in combination with others.

### (Radio Communication Method)

### <First Embodiment>

In a first embodiment, a UE does not change a TCI state of a multi-slot PDSCH in a certain serving cell or a certain BWP.

The UE is not required to expect to receive DL DCI indicating that a time offset between reception of the DL DCI and reception of a first slot (or first repetition) of the multi-slot PDSCH corresponding to the DL DCI is smaller than the given threshold value ("Threshold-Sched-Offset"). That is, it may not be permissible for a base station to instruct the UE for such a time offset.

Note that the time offset may be determined based on a slot offset K₀. Here, the UE may be configured with several candidates for the slot offset K₀ by higher layer signaling, and one of the candidates may be indicated by a DCI time domain resource allocation field. For example, the UE may not expect K₀ to be configured or indicated to be less than the given threshold value ("Threshold-Sched-Offset").

In addition, the UE may not expect to receive a TCI state activation/deactivation for UE-specific PDSCH MAC CE in which TCI state activation or deactivation is complete during (duration) a multi-slot PDSCH (e.g., corresponding to the slot n + 3*(the number of slots in a subframe) + 1 described above). That is, it may not be permissible for the base station to transmit such a MAC CE to the UE.

Furthermore, the UE may receive a TCI state activation/deactivation for UE-specific PDSCH MAC CE in which TCI state activation or deactivation is complete during the multi-slot PDSCH.

In this case, the UE does not have to change the TCI state of the multi-slot PDSCH that has already started reception even at the timing of completion of activation or deactivation based on the MAC CE. That is, the UE may assume that the TCI state of the multi-slot PDSCH does not change during the reception. After the reception of all slots of the multi-slot PDSCH is complete, the UE may perform activation or deactivation based on the received MAC CE (may be activated or may be complete).

According to the first embodiment described above, the TCI state applied to the multi-slot can be appropriately controlled.

### <Second Embodiment>

In a second embodiment, a UE may change a TCI state of a multi-slot PDSCH in a certain serving cell or a certain BWP.

The UE may change the TCI state during the multi-slot PDSCH in one or both of the following cases:
(1) a case of receiving DL DCI indicating that a time offset between reception of the DL DCI and reception of a first slot (or first repetition) of the multi-slot PDSCH corresponding to the DL DCI is smaller than the given threshold value ("Threshold-Sched-Offset"); and
(2) a case of receiving a TCI state activation/deactivation for UE-specific PDSCH MAC CE in which TCI state activation or deactivation is complete during the multi-slot PDSCH.

In the case of (1) described above, the UE may assume, among the multi-slot PDSCH, a default QCL (TCI state) based on the minimum CORESET ID in the latest (or recent) slot for the PDSCH of the slot in which the time offset from the DL DCI reception is less than the given threshold value ("Threshold-Sched-Offset"), and may follow a QCL (TCI state) based on the TCI field included in the DL DCI for other PDSCH slots (in which the time offset is equal to or more than the given threshold value).

In the case of (2) described above, the UE may determine a QCL (TCI state) using mapping of a code point of a TCI field before update based on a MAC CE or may assume the default QCL (TCI state) mentioned above for, among the multi-slot PDSCH, a PDSCH before the timing at which activation or deactivation based on the MAC CE is complete, and may determine a QCL (TCI state) using mapping of the code point of the TCI field after the update based on the MAC CE for other PDSCH slots (same as or after the completion timing mentioned above).

For example, a case where a value of the TCI field of the DCI that schedules the multi-slot PDSCH is i, and the TCI state ID corresponding to TCI field = i is a first TCI state ID before the update based on the MAC CE while it is a second TCI state ID (different from the first TCI state ID) after the update will be considered.

In this case, the UE may receive the PDSCH based on the first TCI state ID before the completion of the activation based on the MAC CE, and may receive the PDSCH based on the second TCI state ID after the completion of the activation.

Furthermore, when the first TCI state ID is still active after the update (e.g., it is activated by the MAC CE while a code point is different (mapped to TCI field = j (j ≠ i)), the UE may follow the first TCI state ID throughout all slots of the multi-slot PDSCH regardless of the completion of the MAC CE activation. According to this configuration, during a multi-slot, flexible control can be performed in such a manner that the TCI state applied to the multi-slot is not changed when the same TCI state is continuously active and otherwise the TCI state is switched to another TCI state.

According to the second embodiment described above, the TCI state applied to the multi-slot can be appropriately controlled.

### <Variations>

Although the multi-slot PDSCH has been described in each of the embodiments above, the scope of the application of the invention described in the present disclosure is not limited thereto. The multi-slot in the present disclosure may be read as a single slot, a cross slot, or the like.

For example, the "first slot of the multi-slot PDSCH" in the present disclosure may be read as a "slot of the PDSCH". Further, "during the multi-slot PDSCH" may be read as "from the reception of the DCI that schedules the PDSCH to the slot of the PDSCH".

Furthermore, each of the embodiments described above may be similarly applied to multi-slot transmission/reception other than the multi-slot PDSCH (e.g., multi-slot PUCCH and multi-slot PUSCH) and multi-slot transmission/reception of reference signals (e.g., CSI-RS, SSB, DMRS, SRS, etc.).

For example, PDSCH reception may be read as PUCCH transmission when the multi-slot PDSCH in each of the embodiments described above is read as a multi-slot PUCCH. Similarly, a TCI state in each of the embodiments described above may be read as a spatial relation or spatial relation information when being read as the PUCCH transmission.

In this case, a time offset between reception of DL DCI and transmission of a first slot (or first repetition) of the multi-slot PUCCH corresponding to the DL DCI may be determined based on at least one of the slot offset K₀, the repetition number of the PDSCH, and the timing from PDSCH reception to the transmission of the HARQ-ACK corresponding to the PDSCH (which may be called PDSCH-to-ACK, "K₁", etc.).

For example, the UE may not expect K₁ to be configured or indicated to be less than the given threshold value ("Threshold-Sched-Offset").

Note that how to deal with activation/deactivation of the TCI state requested during the multi-slot in a certain serving cell or a certain BWP may be dependent on the implementation of the UE. The UE may switch the embodiments described above to serve as the basis of the TCI state determination of the multi-slot based on some conditions.

### (Radio Communication System)

Hereinafter, a configuration of a radio communication system according to an embodiment of the present disclosure will be described. In the radio communication system, communication is performed using one or a combination of the radio communication methods according to the embodiments of the present disclosure.

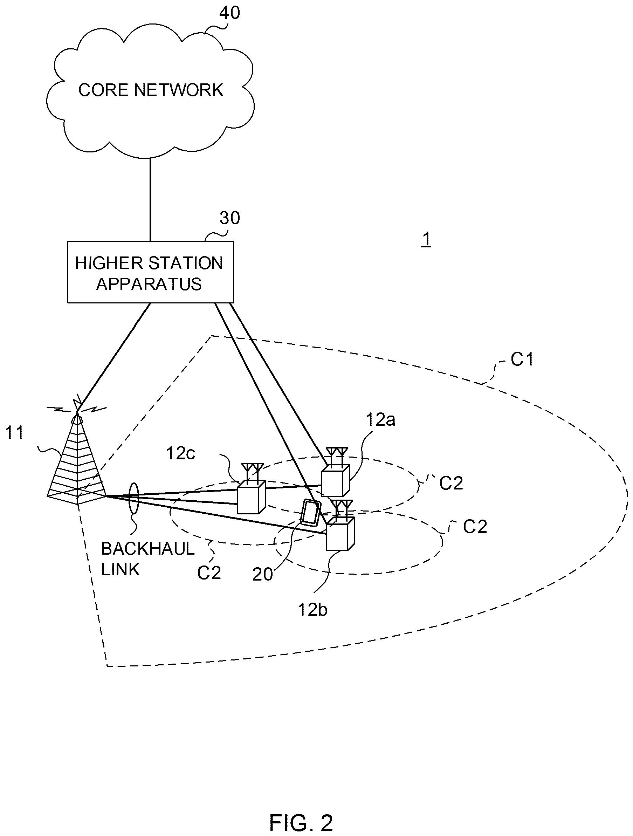

Fig. 2 is a diagram illustrating an exemplary schematic configuration of a radio communication system according to one embodiment. A radio communication system 1 can adopt at least one of carrier aggregation (CA) and dual connectivity (DC) to group a plurality of fundamental frequency blocks (component carriers) into one, where the system bandwidth (e.g., 20 MHz) constitutes one unit.

Note that the radio communication system 1 may be called "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and the like, or may be seen as a system to implement these.

The radio communication system 1 may support dual connectivity (Multi-RAT Dual Connectivity (MR-DC)) between a plurality of Radio Access Technologies (RATs). The MR-DC may include dual connectivity between the LTE and NR in which an LTE (E-UTRA) base station (eNB) becomes a master node (MN) and an NR base station (gNB) becomes a secondary node (SN) (E-UTRA-NR Dual Connectivity (EN-DC)), dual connectivity between the NR and LTE in which the NR base station (gNB) becomes a MN and the LTE (E-UTRA) base station (eNB) becomes a SN (NR-E-UTRA Dual Connectivity (NE-DC)), and the like.

The radio communication system 1 may support dual connectivity between a plurality of base stations in the same RAT (e.g., dual connectivity in which both of the MN and SN become the NR base station (gNB) (NR-NR Dual Connectivity (NN-DC)).

The radio communication system 1 includes a base station 11 that forms a macro cell C1 covering a relatively wide coverage, and base stations 12 (12a to 12c) that are placed within the macro cell C1 and that form small cells C2, which are narrower than the macro cell C1. Also, a user terminal 20 is placed in the macro cell C1 and in each of the small cells C2. The arrangement, number, and the like of the cells and user terminal 20 are not limited to the aspect illustrated in the figure.

The user terminal 20 can connect with both the base station 11 and the base stations 12. The user terminal 20 may use the macro cell C1 and the small cells C2 simultaneously using CA or DC. Furthermore, the user terminal 20 may apply CA or DC using a plurality of cells (CCs) .

Between the user terminal 20 and the base station 11, communication can be carried out using a carrier of a relatively low frequency band (e.g., 2 GHz) and a narrow bandwidth (also called an "existing carrier," a "legacy carrier", etc.). Meanwhile, between the user terminal 20 and the base stations 12, a carrier of a relatively high frequency band (e.g., 3.5 GHz, 5 GHz, etc.) and a wide bandwidth may be used, or the carrier same as that used in the base station 11 may be used. Note that the structure of the frequency band for use in each base station is by no means limited to these.

Further, the user terminal 20 is capable of performing communication in each cell using at least one of time division duplex (TDD) and frequency division duplex (FDD). Further, in each cell (carrier), a single numerology may be applied, or a plurality of different numerologies may be applied.

The base station 11 and the base station 12 (or between two base stations 12) may be connected by wire (e.g., means in conformity with the common public radio interface (CPRI) such as optical fiber, an X2 interface, etc.) or wirelessly.

The base station 11 and the base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME), or the like, but is by no means limited to these. Also, each of the base stations 12 may be connected with the higher station apparatus 30 via the base station 11.

Note that the base station 11 is a base station having a relatively wide coverage, and may be called a "macro base station," an "aggregate node," an "eNB (eNodeB)," a "transmission/reception point", and the like. Also, the base stations 12 are base stations having local coverages, and may be called "small base stations," "micro base stations," "pico base stations," "femto base stations," "HeNBs (Home eNodeBs)," "RRHs (Remote Radio Heads)," "transmission/reception points", and the like. Hereinafter, the base stations 11 and 12 will be collectively referred to as "base stations 10," unless specified otherwise.

Each user terminal 20 is a terminal supporting various communication schemes such as LTE, LTE-A, and 5G, and may be either a mobile communication terminal (mobile station) or a stationary communication terminal (fixed station).

In the radio communication system 1, as a radio access method, orthogonal frequency division multiple access (OFDMA) is applied to the downlink, and at least one of single carrier-frequency division multiple access (SC-FDMA) and OFDMA is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes may be used.

In the radio communication system 1, a physical downlink shared channel (PDSCH), a physical broadcast channel (PBCH), a downlink control channel, and the like, which are shared by each user terminal 20, are used as the downlink channel. User data, higher layer control information, a system information block (SIB), and the like are transmitted in the PDSCH. Further, a master information block (MIB) is transmitted in the PBCH.

The downlink control channels include a physical downlink control channel (PDCCH), an enhanced physical downlink control channel (EPDCCH), a physical control format indicator channel (PCFICH), a physical hybrid-ARQ indicator channel (PHICH), and the like. The use of PDCCH causes downlink control information (DCI) or the like including scheduling information of at least one of PDSCH and PUSCH to be transmitted.

Note that DCI that schedules reception of DL data may also be called "DL assignment," and DCI that schedules transmission of UL data may also be called "UL grant."

The use of PCFICH may cause the number of OFDM symbols used for the PDCCH to be transmitted. The PHICH may cause hybrid automatic repeat request (HARQ) delivery acknowledgement information (e.g., also referred to as retransmission control information, HARQ-ACK, ACK/NACK, etc.) for the PUSCH to be transmitted. The EPDCCH is frequency-division-multiplexed with the PDSCH (downlink shared data channel) and used to transmit DCI and the like, in a similar manner to the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), and the like are used as uplink channels. In the PUSCH, user data, higher layer control information, and the like are communicated. Further, in the PUCCH, downlink radio quality information (Channel Quality Indicator (CQI)), delivery acknowledgement information, scheduling requests (SRs), and the like are communicated. In the PRACH, random access preambles for establishing connections with cells are transmitted.

In the radio communication systems 1, cell-specific reference signals (CRSs), channel state information reference signals (CSI-RSs), demodulation reference signals (DMRSs), positioning reference signals (PRSs), and the like are communicated as downlink reference signals. Further, in the radio communication system 1, measurement reference signals (Sounding Reference Signals (SRSs)), demodulation reference signals (DMRSs), and the like are communicated as uplink reference signals. Note that the DMRSs may be called UE-specific reference signals. Furthermore, the reference signals to be communicated are by no means limited to these.

### (Base Station)

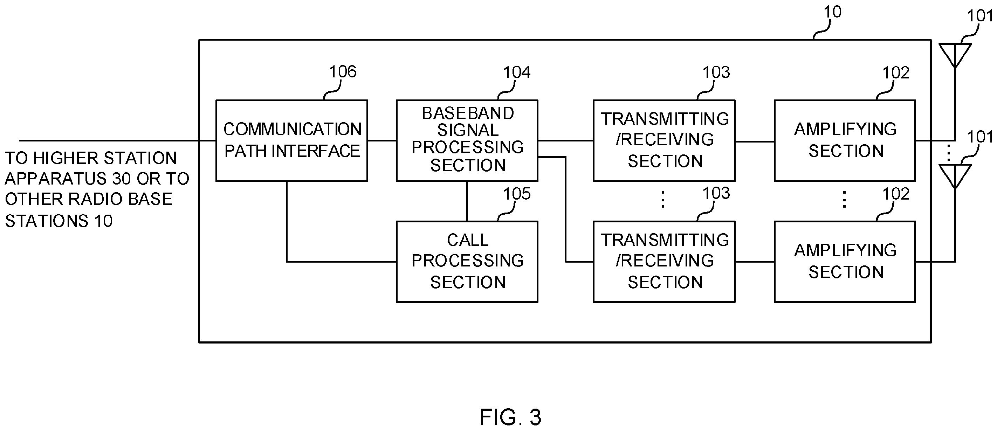

Fig. 3 is a diagram illustrating an exemplary overall configuration of a base station according to a background example useful for understanding an embodiment. A base station 10 includes a plurality of transmission/reception antennas 101, amplifying sections 102, transmitting/receiving sections 103, a baseband signal processing section 104, a call processing section 105, and a communication path interface 106. Note that it is sufficient if one or more transmission/reception antennas 101, one or more amplifying sections 102, and one or more transmitting/receiving sections 103 are provided.

User data to be transmitted from the base station 10 to the user terminal 20 on the downlink is input from the higher station apparatus 30 to the baseband signal processing section 104 via the communication path interface 106.

In the baseband signal processing section 104, the user data is subject to transmission processes including a Packet Data Convergence Protocol (PDCP) layer process, division and combining of the user data, a Radio Link Control (RLC) layer transmission process such as RLC retransmission control, Medium Access Control (MAC) retransmission control (e.g., an HARQ transmission process), scheduling, transport format selection, channel coding, an Inverse Fast Fourier Transform (IFFT) process, and a precoding process, and is forwarded to the transmitting/receiving sections 103. Furthermore, downlink control signals are also subject to transmission processes such as channel coding and an inverse fast Fourier transform, and are forwarded to the transmitting/receiving sections 103.

The base band signals, which are pre-coded and output from the baseband signal processing section 104 for each antenna, are converted into a radio frequency band in the transmitting/receiving sections 103 and then transmitted. The radio frequency signals having been subject to frequency conversion in the transmitting/receiving sections 103 are amplified by the amplifying sections 102, and are transmitted from the transmission/reception antennas 101. The transmitting/receiving sections 103 can be constituted by a transmitter/receiver, a transmission/reception circuit, or a transmission/reception apparatus that can be described based on general understanding of the technical field to which the present disclosure pertains. Note that the transmitting/receiving sections 103 may be configured as a transmitting/receiving section in one entity, or may be constituted by a transmitting section and a receiving section.

Meanwhile, as for uplink signals, radio frequency signals received by the transmission/reception antennas 101 are amplified in the amplifying sections 102. The transmitting/receiving sections 103 receive the uplink signals amplified in the amplifying sections 102. The received signals are converted into baseband signals through frequency conversion in the transmitting/receiving sections 103 and output to the baseband signal processing section 104.

In the baseband signal processing section 104, user data included in the input uplink signals is subject to a fast Fourier transform (FFT) process, an inverse discrete Fourier transform (IDFT) process, error correction decoding, a MAC retransmission control receiving process, and RLC layer and PDCP layer receiving processes, and is forwarded to the higher station apparatus 30 via the communication path interface 106. The call processing section 105 performs call processing (such as setting up and releasing) of communication channels, manages the state of the base stations 10, and manages the radio resources, for example.

The communication path interface 106 transmits and receives signals to and from the higher station apparatus 30 via a predetermined interface. Also, the communication path interface 106 may transmit and receive signals (backhaul signaling) to and from other base stations 10 via an interbase station interface (e.g., optical fiber in conformity with the Common Public Radio Interface (CPRI), X2 interface, etc.).

The transmitting/receiving sections 103 receive and/or transmit various types of information described in the above-described embodiments from/to the user terminal 20.

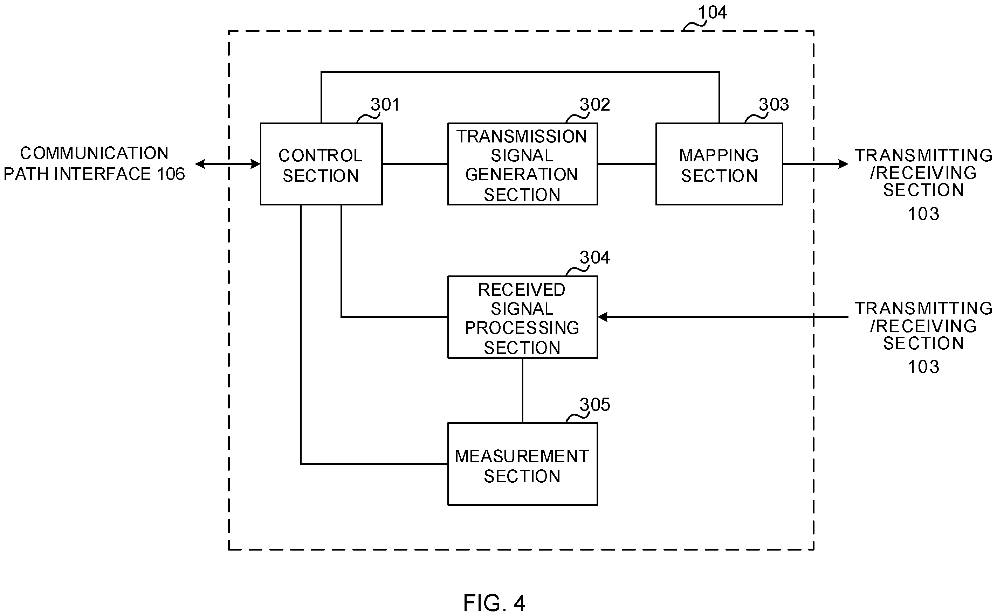

Fig. 4 is a diagram illustrating an exemplary functional configuration of a base station according to a background example useful for understanding an embodiment. Note that, although this example will primarily show functional blocks that pertain to characteristic parts of the present background example, it may be assumed that the base station 10 has other functional blocks necessary for radio communication as well.

The baseband signal processing section 104 at least includes a control section (scheduler) 301, a transmission signal generation section 302, a mapping section 303, a received signal processing section 304, and a measurement section 305. Note that these configurations only have to be included in the base station 10, and some or all of these configurations may not be included in the baseband signal processing section 104.

The control section (scheduler) 301 controls the entire base station 10. The control section 301 can be constituted by a controller, a control circuit, or a control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal reception processing in the received signal processing section 304, the measurement of signals in the measurement section 305, and the like.

The control section 301 controls the scheduling (e.g., resource allocation) of system information, downlink data signals (e.g., signals transmitted in the PDSCH), and downlink control signals (e.g., signals transmitted in the PDCCH and/or the EPDCCH, such as delivery acknowledgement information). The control section 301 controls the generation of downlink control signals, downlink data signals, and the like based on, for example, the results of determining whether or not retransmission control is necessary for uplink data signals.

The control section 301 controls scheduling of synchronization signals (e.g., PSS/SSS), downlink reference signals (e.g., CRS, CSI-RS, and DMRS), and the like.

The control section 301 may use digital BF (e.g., precoding) by the baseband signal processing section 104 and/or analog BF (e.g., phase rotation) by the transmitting/receiving sections 103 to perform control to form a Tx beam and/or a reception beam.

The transmission signal generation section 302 generates downlink signals (downlink control signals, downlink data signals, downlink reference signals, etc.) based on commands from the control section 301, and outputs the signals to the mapping section 303. The transmission signal generation section 302 can be constituted by a signal generator, a signal generation circuit, or a signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subject to the coding processing, the modulation processing, and the like using, for example, coding rates and modulation schemes determined based on channel state information (CSI) reported from each user terminal 20 and the like.

The mapping section 303 maps the downlink signals generated in the transmission signal generation section 302 to predetermined radio resources based on commands from the control section 301, and outputs them to the transmitting/receiving sections 103. The mapping section 303 can be constituted by a mapper, a mapping circuit, or a mapping apparatus that can be described based on general understanding of the technical field to which the present disclosure pertains.

The received signal processing section 304 performs reception processing (e.g., demapping, demodulation, decoding, etc.) on the received signals input from the transmitting/receiving sections 103. Here, the received signals include, for example, uplink signals (uplink control signals, uplink data signals, uplink reference signals, etc.) transmitted from the user terminal 20. The received signal processing section 304 can be constituted by a signal processor, a signal processing circuit, or a signal processing apparatus that can be described based on general understanding of the technical field to which the present disclosure pertains.

The received signal processing section 304 outputs, to the control section 301, information decoded by the reception processing. For example, when a PUCCH including an HARQ-ACK is received, the HARQ-ACK is output to the control section 301. Also, the received signal processing section 304 outputs, to the measurement section 305, the received signals and/or the signals having been subject to the reception processing.

The measurement section 305 conducts measurement with respect to the received signals. The measurement section 305 can be constituted by a measurer, a measurement circuit, or a measurement apparatus that can be described based on general understanding of the technical field to which the present disclosure pertains.

For example, the measurement section 305 may perform Radio Resource Management (RRM) measurement, Channel State Information (CSI) measurement, and the like based on the received signals. The measurement section 305 may measure the received power (e.g., Reference Signal Received Power (RSRP)), the received quality (e.g., Reference Signal Received Quality (RSRQ), Signal to Interference plus Noise Ratio (SINR), and Signal to Noise Ratio (SNR)), the signal strength (e.g., Received Signal Strength Indicator (RSSI)), transmission path information (e.g., CSI), and the like. The measurement results may be output to the control section 301.

Note that the transmitting/receiving sections 103 perform multi-slot transmission or reception of a given channel (e.g., PDSCH, PUSCH, and PUCCH) and given reference signals (e.g., CSI-RS, SSB, and SRS).

The control section 301 may perform control related to the multi-slot transmission or reception mentioned above in such a manner that the user terminal 20 can process a change in the TCI state of the multi-slot transmission or reception based on a given assumption.

### (User Terminal)

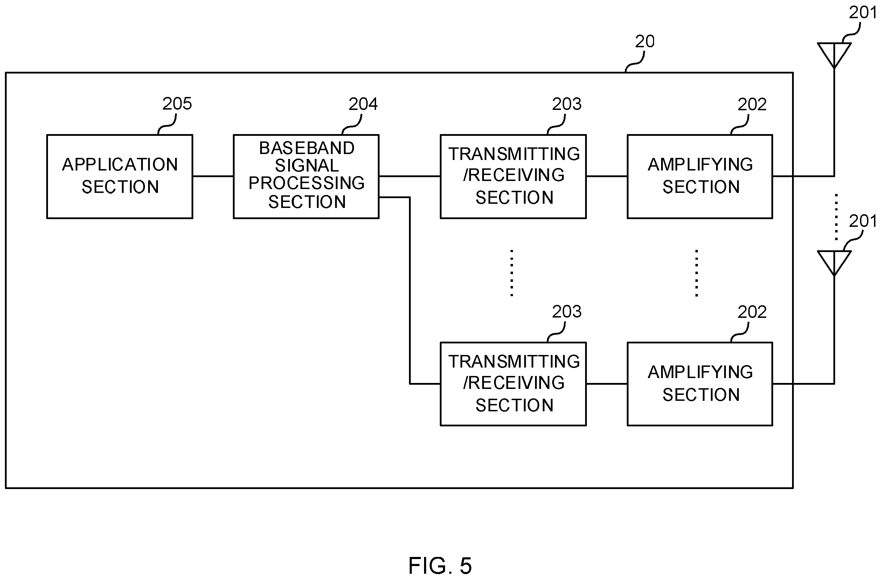

Fig. 5 is a diagram illustrating an exemplary overall configuration of a user terminal according to one embodiment. The user terminal 20 includes a plurality of transmission/reception antennas 201, amplifying sections 202, transmitting/receiving sections 203, a baseband signal processing section 204, and an application section 205. Note that it is sufficient if one or more transmission/reception antennas 201, one or more amplifying sections 202, and one or more transmitting/receiving sections 203 are provided.

Radio frequency signals received in the transmission/reception antennas 201 are amplified in the amplifying sections 202. The transmitting/receiving sections 203 receive the downlink signals amplified in the amplifying sections 202. The received signals are converted into baseband signals through frequency conversion in the transmitting/receiving sections 203 and output to the baseband signal processing section 204. The transmitting/receiving sections 203 can be constituted by a transmitters/receiver, a transmission/reception circuit, or a transmission/reception apparatus that can be described based on general understanding of the technical field to which the present disclosure pertains. Note that the transmitting/receiving sections 203 may be configured as a transmitting/receiving section in one entity, or may be constituted by a transmitting section and a receiving section.

The baseband signal processing section 204 performs an FFT process, error correction decoding, a retransmission control receiving process, and the like on the input base band signals. Downlink user data is forwarded to the application section 205. The application section 205 performs processes related to higher layers above the physical layer and the MAC layer, and the like. In addition, in the downlink data, the broadcast information can be also forwarded to the application section 205.

Meanwhile, uplink user data is input from the application section 205 to the baseband signal processing section 204. The baseband signal processing section 204 performs a retransmission control transmission processing (e.g., HARQ transmission processing), channel coding, precoding, discrete Fourier transform (DFT) processing, IFFT processing, and the like, and the result is forwarded to the transmitting/receiving sections 203.

The baseband signals output from the baseband signal processing section 204 are converted into a radio frequency band in the transmitting/receiving sections 203 and then transmitted. The radio frequency signals having been subject to frequency conversion in the transmitting/receiving sections 203 are amplified in the amplifying sections 202, and are transmitted from the transmission/reception antennas 201.

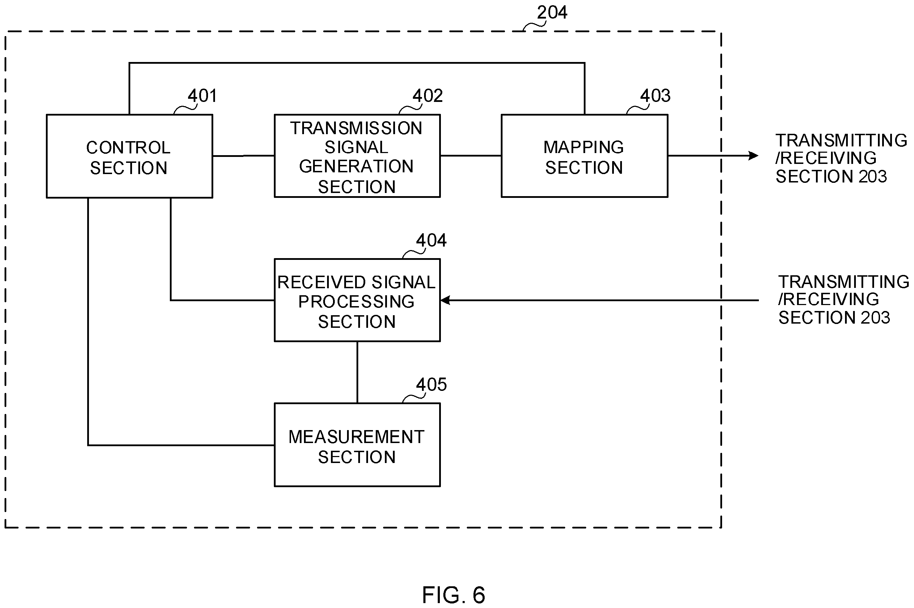

Fig. 6 is a diagram illustrating an exemplary functional configuration of a user terminal according to one embodiment. Note that, although the present example will primarily show functional blocks that pertain to characteristic parts of the present embodiment, it may be assumed that the user terminal 20 has other functional blocks necessary for radio communication as well.

The baseband signal processing section 204 provided in the user terminal 20 at least includes a control section 401, a transmission signal generation section 402, a mapping section 403, a received signal processing section 404, and a measurement section 405. Note that these configurations only have to be included in the user terminal 20, and some or all of the configurations may not be included in the baseband signal processing section 204.

The control section 401 controls the entire user terminal 20. The control section 401 can be constituted by a controller, a control circuit, or a control apparatus that can be described based on general understanding of the technical field to which the present disclosure pertains.

The control section 401 controls, for example, the generation of signals in the transmission signal generation section 402, the allocation of signals in the mapping section 403, and the like. Furthermore, the control section 401 controls the signal reception processing in the received signal processing section 404, the measurement of signals in the measurement section 405, and the like.

The control section 401 obtains, from the received signal processing section 404, the downlink control signals and downlink data signals transmitted from the base station 10. The control section 401 controls the generation of uplink control signals and/or uplink data signals based on, for example, the results of determining whether or not retransmission control is necessary for the downlink control signals and/or downlink data signals.

Further, when the control section 401 obtains, from the received signal processing section 404, various kinds of information reported from the base station 10, it may update the parameters to be used for control based on the information.

The transmission signal generation section 402 generates uplink signals (uplink control signals, uplink data signals, uplink reference signals, etc.) based on commands from the control section 401, and outputs the signals to the mapping section 403. The transmission signal generation section 402 can be constituted by a signal generator, a signal generation circuit, or a signal generation apparatus that can be described based on general understanding of the technical field to which the present disclosure pertains.

For example, the transmission signal generation section 402 generates uplink control signals related to delivery acknowledgement information, channel state information (CSI), and the like based on commands from the control section 401. Also, the transmission signal generation section 402 generates uplink data signals based on commands from the control section 401. For example, when a UL grant is included in the downlink control signals reported from the base station 10, the control section 401 instructs the transmission signal generation section 402 to generate uplink data signals.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit, or a mapping apparatus that can be described based on general understanding of the technical field to which the present disclosure pertains.

The received signal processing section 404 performs reception processing (e.g., demapping, demodulation, decoding, etc.) on the received signals input from the transmitting/receiving sections 203. Here, the received signals include, for example, downlink signals (downlink control signals, downlink data signals, downlink reference signals, etc.) transmitted from the base station 10. The received signal processing section 404 can be constituted by a signal processor, a signal processing circuit, or a signal processing apparatus that can be described based on general understanding of the technical field to which the present disclosure pertains. Also, the received signal processing section 404 can constitute the receiving section according to the present disclosure.

The received signal processing section 404 outputs the decoded information obtained through the reception processing to the control section 401. The received signal processing section 404 outputs, for example, broadcast information, system information, RRC signaling, DCI, and the like, to the control section 401. Also, the received signal processing section 404 outputs, to the measurement section 405, the received signals and/or the signals having been subject to the reception processing.

The measurement section 405 conducts measurement with respect to the received signals. The measurement section 405 can be constituted by a measurer, a measurement circuit, or a measurement apparatus that can be described based on general understanding of the technical field to which the present disclosure pertains.

For example, the measurement section 405 may perform RRM measurement, CSI measurement, and the like based on the received signals. The measurement section 405 may measure the received power (e.g., RSRP), the received quality (e.g., RSRQ, SINR, and SNR), the signal strength (e.g., RSSI), transmission path information (e.g., CSI), and the like. The measurement results may be output to the control section 401.

Note that the transmitting/receiving sections 203 may perform multi-slot transmission or reception of a given channel (e.g., PDSCH, PUSCH, and PUCCH) and given reference signals (e.g., CSI-RS, SSB, and SRS).

The control section 401 may make a given assumption regarding a change in the TCI state of the multi-slot transmission or reception. For example, the control section 401 is not required to expect to receive downlink control information (DCI) indicating that a time offset between reception of the DCI that schedules the multi-slot transmission or reception and the first slot of the multi-slot transmission or reception is smaller than a given threshold value (e.g., "Threshold-Sched-Offset").

The control section 401 is not required to expect to receive TCI state activation control signaling of the given channel (e.g., TCI state activation/deactivation for UE-specific PDSCH MAC CE, PUCCH spatial relation activation/deactivation MAC CE, etc.) in which TCI state activation or deactivation is complete during the multi-slot transmission or reception.

Even in the case of receiving the TCI state activation control signaling of the given channel in which the TCI state activation or deactivation is complete during the multi-slot transmission or reception, the control section 401 may not change the TCI state of the given channel halfway (the same TCI state may be continuously applied).

The control section 401 may allow a change in the TCI state of the given channel during the multi-slot transmission or reception.

### (Hardware Configuration)

Note that the block diagrams used in the descriptions of the embodiments above show blocks in functional units. Those functional blocks (components) may be implemented in optional combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (e.g., using wires, radio, etc.) and using those plural apparatuses. The functional blocks may be achieved by combining the one apparatus or the plurality of apparatuses with software.

Here, the functions include, but are not limited to, assessment, determination, judging, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (component) that causes transmission to function may be called a transmitting section, a transmitter, or the like. In any case, as described above, the implementation method is not particularly limited.

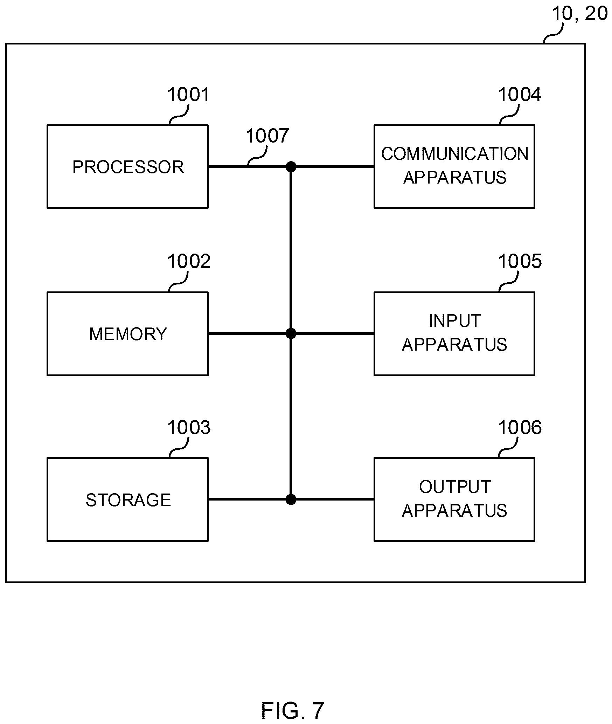

For example, the base station, the user terminal, and the like according to a background example or an embodiment may function as a computer that executes the processing of the radio communication method of the present disclosure. Fig. 7 is a diagram illustrating an exemplary hardware configuration of a base station according to a background example and a user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the word such as an apparatus, a circuit, a device, a section, and a unit can be replaced with each other. The hardware configuration of the base station 10 and the user terminal 20 may be designed to include one or a plurality of each apparatuses illustrated in the drawings, or may be designed not to include some apparatuses.

For example, although only one processor 1001 is illustrated, a plurality of processors may be provided. Furthermore, processes may be executed using one processor, or processes may be executed simultaneously, in sequence, or in different manners, using two or more processors. Note that the processor 1001 may be implemented with one or more chips.

Each function of the base station 10 and the user terminal 20 is implemented by reading predetermined software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 controls the whole computer by, for example, running an operating system. The processor 1001 may be configured with a central processing unit (CPU), which includes interfaces with peripheral equipment, a control apparatus, a computing apparatus, a register, and the like. For example, the above-described baseband signal processing section 104 (204), the call processing section 105, and the like may be implemented by the processor 1001.

Furthermore, the processor 1001 reads, for example, programs (program codes), software modules, or data from at least one of the storage 1003 and the communication apparatus 1004 into the memory 1002, and executes various kinds of processing according to these. As for the programs, programs to cause computers to execute at least part of the operations described in the above-described embodiments are used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), or other appropriate storage media. The memory 1002 may be called a "register," a "cache," a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (Compact Disc ROM (CD-ROM), etc.), a digital versatile disc, and a Blu-ray (registered trademark) disk), a removable disk, a hard disk drive, a smart card, a flash memory device (e.g., a card, a stick, and a key drive), a magnetic stripe, a database, a server, and other appropriate storage media. The storage 1003 may be called a secondary storage apparatus.

The communication apparatus 1004 is hardware (transmission/reception device) for performing inter-computer communication via at least one of a wired network and a wireless network, and is referred to as, for example, a "network device", a "network controller", a "network card", a "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the above-described transmission/reception antennas 101 (201), amplifying sections 102 (202), transmitting/receiving sections 103 (203), communication path interface 106, and the like may be implemented by the communication apparatus 1004. The transmitting/receiving sections 103 (203) may be implemented in a physically or logically separated manner by the transmitting section 103a (203a) and the receiving section 103b (203b).

The input apparatus 1005 is an input device (e.g., a keyboard, a mouse, a microphone, a switch, a button, a sensor, etc.) for receiving input from the outside. The output apparatus 1006 is an output device (e.g., a display, a speaker, a Light Emitting Diode (LED) lamp, etc.) for executing output to the outside. Note that the input apparatus 1005 and the output apparatus 1006 may be provided in an integrated structure (e.g., a touch panel).

Furthermore, those pieces of apparatuses including the processor 1001, the memory 1002, and the like are connected by the bus 1007 for communicating information. The bus 1007 may be formed with a single bus, or may be formed with buses that vary between apparatuses.

Also, the base station 10 and the user terminal 20 may be configured while including hardware such as a microprocessor, a Digital Signal Processor (DSP), an Application-Specific Integrated Circuit (ASIC), a Programmable Logic Device (PLD), and a Field Programmable Gate Array (FPGA), and part or all of the functional blocks may be implemented by the hardware. For example, the processor 1001 may be implemented using at least one of those pieces of hardware.

### (Variations)

Note that the terminology used in the present disclosure and the terminology needed to understand the present disclosure may be replaced with other terms that convey the same or similar meanings. For example, channels, symbols, and signals (signals or signaling) may be replaced with each other. Also, "signals" may be replaced with "messages." A reference signal may be abbreviated as an "RS," and may be called a "pilot," a "pilot signal", and the like depending on which standard applies. Furthermore, a "component carrier (CC)" may be called a "cell," a "frequency carrier," a "carrier frequency", and the like.

A radio frame may include one or more periods (frames) in the time domain. Each of one or more periods (frames) included in a radio frame may be called a "subframe." Furthermore, a subframe may include one or multiple slots in the time domain. A subframe may be a fixed time duration (e.g., 1 ms) that is not dependent on numerology.

Here, the numerology may be a communication parameter applied to at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and the like.

A slot may be comprised of one or more symbols (Orthogonal Frequency Division Multiplexing (OFDM) symbols, Single Carrier Frequency Division Multiple Access (SC-FDMA) symbols, etc.) in the time domain. Also, a slot may be a time unit based on numerology.

A slot may include a plurality of mini slots. Each mini slot may be comprised of one or more symbols in the time domain. Also, a mini slot may be called a "subslot." Each mini slot may be comprised of fewer symbols than a slot. A PDSCH (or PUSCH) transmitted in a time unit larger than a mini slot may be called PDSCH (PUSCH) mapping type A. A PDSCH (or PUSCH) transmitted using a mini slot may be called PDSCH (PUSCH) mapping type B.

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be called a transmission time interval (TTI), a plurality of consecutive subframes may be referred to as a TTI, or one slot or one mini slot may be referred to as a TTI. That is, at least one of a subframe and a TTI may be a subframe (1 ms) in existing LTE, may be a period shorter than 1 ms (e.g., one to thirteen symbols), or may be a period longer than 1 ms. Note that the unit to represent the TTI may be called a "slot," a "mini slot", or the like, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of the TTI is not limited thereto.

The TTI may be the transmission time unit of channel-encoded data packets (transport blocks), code blocks, codewords, and the like, or may be the unit of processing in scheduling, link adaptation, and the like. Note that, when TTI is given, a time interval (e.g., the number of symbols) in which the transport blocks, the code blocks, the codewords, and the like are actually mapped may be shorter than the TTI.

Note that, when one slot or one mini slot is called a "TTI," one or more TTIs (i.e., one or multiple slots or one or more mini slots) may be the minimum time unit of scheduling. Also, the number of slots (the number of mini slots) to constitute the minimum time unit of scheduling may be controlled.

A TTI having a time length of 1 ms may be called usual TTI (TTI in LTE Rel. 8 to 12), normal TTI, long TTI, a usual subframe, a normal subframe, a long subframe, a slot, or the like. A TTI shorter than a usual TTI may be called a shortened TTI, a short TTI, a partial TTI (or fractional TTI), a shortened subframe, a short subframe, a mini slot, a subslot, a slot, or the like.

Note that a long TTI (e.g., a normal TTI, a subframe, etc.) may be replaced with a TTI having a time duration exceeding 1 ms, and a short TTI (e.g., a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe, or one TTI in length. One TTI, one subframe, and the like each may be comprised of one or more resource blocks.

Note that one or more RBs may be called a physical resource block (Physical RB (PRB)), a subcarrier group (SCG), a resource element group (REG), an PRB pair, an RB pair, and the like.

Furthermore, a resource block may be comprised of one or more resource elements (REs). For example, one RE may be a radio resource field of one subcarrier and one symbol.

The bandwidth part (BWP) (which may be called partial bandwidth, etc.) may represent a subset of consecutive common resource blocks (RBs) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a predetermined signal/channel outside the active BWP. Note that a "cell", "carrier", and the like in the present disclosure may be read as a "BWP".

Note that the structures of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information, parameters, and the like described in the present disclosure may be represented in absolute values or in relative values with respect to predetermined values, or may be represented using other applicable information. For example, a radio resource may be specified by a predetermined index.

The names used for parameters and the like in the present disclosure are in no respect limiting. In addition, an equation and the like using those parameters may differ from those explicitly disclosed in the present disclosure. Since various channels (Physical Uplink Control Channel (PUCCH), Physical Downlink Control Channel (PDCCH), etc.) and information elements can be identified by any suitable names, the various names assigned to those individual channels and information elements are in no respect limiting.

The information, signals, and the like described in the present disclosure may be represented using a variety of different techniques. For example, data, instructions, commands, information, signals, bits, symbols, and chips, all of which may be referenced throughout the above description, may be represented by voltages, currents, electromagnetic waves, magnetic fields or particles, optical fields or photons, or any combination of these.

Also, information, signals, and the like can be output in at least one of directions that are from upper layers to lower layers and from lower layers to upper layers. Information, signals, and the like may be input and output via a plurality of network nodes.

The input and/or output information, signals, and the like may be stored in a specific location (e.g., in a memory), or may be managed using a management table. The information, signals, and the like to be input and/or output can be overwritten, updated, or appended. The output information, signals, and the like may be deleted. The input information, signals, and the like may be transmitted to another apparatus.

Notification of information is by no means limited to the aspects/embodiments described in the present disclosure, and other methods may be used as well. For example, notification of information may be implemented using physical layer signaling (e.g., Downlink Control Information (DCI) and Uplink Control Information (UCI), higher layer signaling (e.g., Radio Resource Control (RRC) signaling, broadcast information (Master Information Block (MIB), System Information Block (SIB), etc.), Medium Access Control (MAC) signaling, and other signals and/or combinations of these.

Note that the physical layer signaling may be called Layer 1/Layer 2 (L1/L2) control information (L1/L2 control signals), L1 control information (L1 control signals), and the like. Also, the RRC signaling may be called RRC messages, and may be, for example, an RRC connection setup message, an RRC connection reconfiguration message, and the like. Also, the MAC signaling may be reported using, for example, MAC control elements (MAC CEs).

Also, notification of predetermined information (e.g., notification of information to the effect that "X holds") does not necessarily have to be sent explicitly, and may be sent implicitly (e.g., by not reporting the predetermined information, or by reporting another piece of information).

Determination may be made in values represented by one bit (0 or 1), may be made in Boolean values represented by true or false, or may be made by comparing numerical values (e.g., comparison against a predetermined value).

Software, whether referred to as software, firmware, middleware, microcode, or hardware description language, or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Also, software, instructions, information, and the like may be transmitted and received via communication media. For example, when software is transmitted from a website, a server, or other remote sources by using at least one of wired technologies (coaxial cables, optical fiber cables, twisted-pair cables, digital subscriber lines (DSLs), etc.) and wireless technologies (infrared radiation, microwaves, etc.), at least one of those wired technologies and wireless technologies are also included in the definition of communication media.

The terms "system" and "network" as used in the present disclosure can be used interchangeably.

In the present disclosure, the terms such as "precoding", "precoder", "weight (precoding weight)", "Quasi-Co-Location (QCL)", "transmission configuration indication (TCI) state", "spatial relation", "spatial domain filter", "transmission power", "phase rotation", "antenna port", "antenna port group", "layer", "layer number", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier," and "component carrier" may be used interchangeably. The base station may be called a term such as a macro cell, a small cell, a femto cell, a pico cell, and the like.

A base station can accommodate one or more (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs)). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", and the like may be used interchangeably.

A mobile station may be called a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be called a transmission apparatus, a reception apparatus, a communication apparatus, or the like. Note that at least one of the base station and the mobile station may be a device mounted on a moving body, a moving body itself, or the like. The moving body may be a transportation (e.g., a car, an airplane, etc.), an unmanned moving body (e.g., a drone, an autonomous car, etc.), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Furthermore, a base station in the present disclosure may be interpreted as a user terminal. For example, each aspect/embodiment of the present disclosure may be applied to a structure in which communication between the base station and the user terminal is replaced with communication among a plurality of user terminals (which may be called, for example, D2D (Device-to-Device), V2X (Vehicle-to-Everything), etc.). In this case, the user terminal 20 may have the functions of the base station 10 described above. In addition, the wording such as "uplink" and "downlink" may be replaced with the wording corresponding to communication between terminals (e.g., "side"). For example, an uplink channel, a downlink channel, and the like may be interpreted as a side channel.

Likewise, a user terminal in the present disclosure may be interpreted as a base station. In this case, the base station 10 may have the functions of the user terminal 20 described above.

Certain operations that have been described in the present disclosure to be performed by base stations may be performed by their upper nodes in some cases. In a network including one or more network nodes with base stations, it is obvious that various operations performed to communicate with terminals can be performed by base stations, one or more network nodes (e.g., Mobility Management Entities (MMEs), Serving-Gateways (S-GWs), etc. may be possible, but these are not limiting) other than base stations, or combinations of these.

The aspects/embodiments described in the present disclosure may be used individually or in combinations, which may be switched depending on the mode of implementation. The order of processes, sequences, flowcharts, and the like that have been used to describe the aspects/embodiments in the present disclosure may be re-ordered as long as inconsistencies do not arise. For example, although various methods have been shown in the present disclosure with various components of steps using exemplary orders, the specific orders that are shown herein are by no means limiting.

The aspects/embodiments described in the present disclosure may be applied to the Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM) (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these. Further, a plurality of systems may be combined and applied (e.g., a combination of LTE or LTE-A and 5G).

The phrase "based on" as used in the present disclosure does not mean "only based on", unless otherwise specified. In other words, the phrase "based on" means both "only based on" and "at least based on."

Reference to elements with designations such as "first," "second", and the like as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (e.g., looking up in a table, database, or another data structure), ascertaining, and the like.

Furthermore, "determining" as used herein may be interpreted to mean making determination related to receiving (e.g., receiving information), transmitting (e.g., transmitting information), inputting, outputting, accessing (e.g., accessing data in a memory), and the like.

In addition, "determining" as used herein may be interpreted to mean making determination related to resolving, selecting, choosing, establishing, comparing, and the like. In other words, "determining" as used herein may be interpreted to mean making determination related to some operations.

In addition, "determining" as used herein may be interpreted to mean "assuming", "expecting", "considering", and the like.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". The terms such as "separated", "coupled", and the like may be similarly interpreted as "different".

When terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

## Claims

1. A user terminal (20) comprising:
a transmitting/receiving section (203) configured to perform physical uplink control channel, PUCCH, transmission over multiple slots; and
a control section (401) configured to control the PUCCH transmission such that a PUCCH spatial relation is not changed during the PUCCH transmission.

2. The user terminal (20) according to claim 1, wherein the control section (401) is configured to control, even when the user terminal receives a Medium Access Control control element used for activation or deactivation of the PUCCH spatial relation, such that activation or deactivation of the PUCCH spatial relation is complete during the PUCCH transmission, not to change the PUCCH spatial relation during the PUCCH transmission.

3. A radio communication method for a user terminal, comprising:
performing physical uplink control channel, PUCCH, transmission over multiple slots; and
controlling the PUCCH transmission such that a PUCCH spatial relation is not changed during the PUCCH transmission.

4. A system comprising: a base station (10); and a user terminal (20) according to claim 1 or 2, wherein
the base station (10) comprises a transmitting/receiving section (103) configured to perform PUCCH reception over multiple slots.

## Patentansprüche

1. Benutzerendgerät (20), umfassend:
einen Sende-/Empfangsabschnitt (203),
der so konfiguriert ist, dass er eine physikalische Aufwärtsverbindungssteuerkanal-, PUCCH, Übertragung über mehrere Schlitze durchführt; und
einen Steuerabschnitt (401), der so konfiguriert ist, dass er die PUCCH-Übertragung so steuert, dass eine PUCCH-Raumbeziehung während der PUCCH-Übertragung nicht geändert wird.

2. Benutzerendgerät (20) nach Anspruch 1, wobei der Steuerabschnitt (401) so konfiguriert ist, dass er selbst dann, wenn das Benutzerendgerät ein Medienzugriffssteuerungs-Steuerelement empfängt, das zur Aktivierung oder Deaktivierung der PUCCH-Raumbeziehung verwendet wird, so steuert, dass die Aktivierung oder Deaktivierung der PUCCH-Raumbeziehung während der PUCCH-Übertragung abgeschlossen ist, um die PUCCH-Raumbeziehung während der PUCCH-Übertragung nicht zu ändern.

3. Funkkommunikationsverfahren für ein Benutzerendgerät, das umfasst:
Durchführen einer physikalischen Aufwärtsverbindungssteuerkanal-, PUCCH, Übertragung über mehrere Schlitze; und
Steuern der PUCCH-Übertragung derart, dass eine PUCCH-Raumbeziehung während der PUCCH-Übertragung nicht geändert wird.

4. System, umfassend: eine Basisstation (10); und ein Benutzerendgerät (20) nach Anspruch 1 oder 2, wobei
die Basisstation (10) einen Sende-/Empfangsabschnitt (103) umfasst, der so konfiguriert ist, dass er PUCCH-Empfang über mehrere Schlitze durchführt.

## Revendications

1. Terminal utilisateur (20) comprenant :
une section de transmission/réception (203) configurée pour mettre en oeuvre une transmission de canal de commande de liaison montante physique, PUCCH (physical uplink control channel), sur de multiples intervalles ; et
une section de commande (401) configurée pour commander la transmission PUCCH de telle sorte qu'une relation spatiale PUCCH ne soit pas modifiée pendant la transmission PUCCH.

2. Terminal utilisateur (20) selon la revendication 1, dans lequel la section de commande (401) est configurée pour commander, même lorsque le terminal utilisateur reçoit un élément de commande de contrôle d'accès au support (Medium Access Control), utilisé pour l'activation ou la désactivation de la relation spatiale PUCCH, de telle sorte que l'activation ou la désactivation de la relation spatiale PUCCH soit terminée pendant la transmission PUCCH, pour ne pas changer la relation spatiale PUCCH pendant la transmission PUCCH.

3. Procédé de communication radio pour un terminal utilisateur, comprenant :
mettre en oeuvre une transmission de canal de commande de liaison montante physique, PUCCH (physical uplink control channel), sur de multiples intervalles ; et
commander la transmission PUCCH de telle sorte qu'une relation spatiale PUCCH ne soit pas modifiée pendant la transmission PUCCH.

4. Système comprenant : une station de base (10) ; et un terminal utilisateur (20) selon la revendication 1 ou la revendication 2, dans lequel
la station de base (10) comprend une section de transmission/réception (103) configurée pour mettre en oeuvre une réception PUCCH sur de multiples intervalles.
